# EUROPÄISCHE PATENTSCHRIFT

(11) **EP 0 738 649 B1**
(45) Veröffentlichungstag und Bekanntmachung des Hinweises auf die Patenterteilung: **02.09.1998**
(21) Anmeldenummer: 96890070.4
(22) Anmeldetag: 18.04.1996
(51) Int. Cl.: B62D 33/04, B60J 5/04

(54) **Seitenwand für Fahrzeuge**
Sidewall for vehicles
Paroi latérale pour véhicules

(30) Priorität: 21.04.1995 AT 682/95; 21.03.1996 AT 527/96
(43) Veröffentlichungstag der Anmeldung: 23.10.1996
(73) Patentinhaber: Strasser, Johann, 5301 Eugendorf (AT)
(72) Erfinder: Strasser, Johann, 5301 Eugendorf (AT)
(74) Vertreter: Köhler-Pavlik, Johann, Dipl.-Ing.

(56) Entgegenhaltungen:
- BE-A- 719 007
- BE-A- 744 868
- DE-A- 2 638 972
- DE-A- 2 919 608
- DE-A- 3 046 178
- DE-A- 3 102 891
- DE-U- 9 108 949
- DE-U- 9 218 398
- FR-A- 2 418 734
- FR-A- 2 710 019

## Beschreibung

Die Erfindung betrifft eine Seitenwand für den Aufbau einem Fahrzeuges nach dem Oberbegriff des Anspruchs 1.

Bei Seitenwänden von Fahrzeugen, insbesondere von Lastkraftwagen besteht bei fester, d. h. nicht lediglich aus Planen bestehender, Abdeckung das Problem, daß die Seitenwand zum Beund Entladen entfernt, verschwenkt oder verschoben werden muß. Unter den Begriff Seitenwände fallen dabei alle Seiten, d.h. auch die Rückseite des Fahrzeuges. Ein Verschieben ganzer Seitenwandteile in der Seitenwandebene, wie bei Güterwaggons gebräuchlich. erfordert viel Platz neben der eigentlichen Ladeöffnung, die deshalb nur einen Teil der Seitenwandlänge ausmachen kann. Bei Lastkraftwagen ist diese Variante nur für die Längsseiten anwendbar, da nur hier Führungen für die verschobenen Seitenwandteile vorgesehen sein können. Bei geöffneter und insbesondere bei nach vorne zum Führerhaus verschobener Seitenwand ist ein sicheres Fahren mit dem Lastwagen nicht möglich.

Im ganzen verschwenkbare Seitenwände erfordern zu viel Platz seitlich und oberhalb des Fahrzeuges, sodaß sie für den praktischen Einsatz nicht geeignet sind. Auch die Betätigung wäre aufgrund des großen Drehmomentes zu aufwendig und kompliziert.

Horizontal geteilte Seitenwände, bei welchen ein Seitenwandteil nach unten geklappt wird, verhindern ebenfalls ein Fahren mit dem Fahrzeug bei geöffneter Seitenwand, da diese entweder am Boden oder am Fahrzeug streift bzw. gegen dieses schlägt.

Vertikal geteilte, schwenkbare Seitenwände. d. h. im wesentlichen horizontal schwenkbare Türen. bieten dagegen keinen Schutz gegen Witterungseinflüsse beim Be- und Entladen - ebenso wie übrigens auch die Schiebetüren - und die Möglichkeit des Fahrens bei geöffneter Tür ist abhängig von derer Lage.

Eine Seitenwand der eingangs erwähnten Art wird beispielsweise in der BE 719 007 A beschrieben. Diese Seitenwand dient insbesondere als Abdeckung der Gepäckablagefächer von Reisebussen. Ein Verschwenken der Seitenwand oberhalb des Daches des Aufbaues des Fahrzeuges ist bei dieser Konstruktion nicht möglich. Auch die Seitenwand gemäß der BE 744 868 A bei der der untere Längsrand des unteren Wandteils am Aufbau des Fahrzeuges geführt wird, ermöglicht eine Vollständige Öffnung.

Aus der DE 26 38 972 A1 ist ein Kastenaufbau für Lastkraftwagen bekannt, bei dem die Wand als Faltklappe aus zumindest zwei miteinander gelenkig verbundenen Einzelteilen ausgebildet ist, wobei der obere Wandteil mit dem Aufbau gelenkig verbunden ist. Der untere Wandteil trägt im unteren Randbereich Rollen, welche in Führungen des Fahrzeugaufbaus eingreifen. Auch die Konstruktion der DE 31 02 891 A1 ist durch eine zweigeteilte Türklappe gekennzeichnet, wobei der untere Teil der Türklappe durch einen Schwenkhebel nach oben bewegt wird. Die Wand ist bei diesen beiden Konstruktionen nur bis zu 90° bzw. etwas darüber aufklappbar und kann daher beim Be- und Entladen als Witterungsschutz dienen. Allerdings stellt die aufgeklappte Wand ein Hindernis für einen Stapler dar und macht ein Manövrieren des Fahrzeuges nur beschränkt möglich.

Die Ladewand eines Lastkraftwagens gemäß der DE 29 19 608 A1 ist in einen unteren und einen oberen Wandteil unterteilt und kann mit Hilfe eines Seilzugs, der am unteren Randbereich des unteren Seitenwandteils angreift, aufgeklappt werden. Durch einen aufklappbaren Dachteil wird ein vollständiges Aufklappen ermöglicht. Der dafür notwendige Mechanismus ist allerdings sehr aufwendig und darüberhinaus weisen Seilzüge ein Risiko gegenüber der Verwendung von Hebeln oder Lenkern auf, da bei Riß des Seiles die Ladewand herabfallen und Menschen gefährden könnte Ähnlich aufgebaut ist der in der DE 30 46 178 A1 beschriebene Aufbau für einen Lastkraftwagen, wobei die zusammengeklappten Seitenwandteile unter das Dach des Fahrzeuges in den Laderaum gezogen werden können. Dadurch stellen die Seitenwandteile zwar kein Hindernis für einen Stapler dar und lassen ein Manövrieren des Fahrzeuges zu, allerdings geht ein Teil des wertvollen Ladevolumens für die Unterbringung der Seitenwand verloren.

Die Konstruktion nach der FR 2 710 019 A1 weist ebenfalls eine in zwei horizontale Teile geteilte, aufklappbare Seitenwand eines Lastwagenaufbaus auf, deren oberer Seitenwandteil durch Hebel verschwenkt werden kann und den am oberen Seitenwandteil gelenkig angebrachten unteren Seitenwandteil frei schwenkend mitgezogen wird. Die gesamte Seitenwand kann bis über das Dach geschwenkt werden, wobei die Höhe der zusammengeklappten Seitenwand auf dem Dach der Höhe des unteren Wandteiles entspricht. Durch den frei schwenkenden unteren Wandteil ist ein Risiko der Verletzung von Personen sowie der Beschädigung von Fahrzeugen oder Gebäuden verbunden.

Die Aufgabe der vorliegenden Erfindung liegt darin, die oben erwähnten Nachteile zu vermeiden und eine Seitenwand für Fahrzeuge vorzugschlagen, die möglichst platzsparend motorisch über einen großen Bereich der jeweiligen Fahrzeugseite und mit geringem Aufwand geöffnet und geschlossen werden kann und gleichzeitig ein sicheres Fahren des Fahrzeuges gestattet.

Diese Aufgabe wird erfindungsgemäß durch die Merkmale im kennzeichnenden Teil des Anspruchs 1 gelöst.

Durch die erfindungsgemaße Anordnung wird die gesamte Seitenwand in zwei Wandteile unterteilt, wobei sich seitlich und/oder oberhalb des Fahrzeuges lediglich ein maximal dem kleineren Wandteil entsprechender Platzbedarf ergibt. Da keine Seitenwandteile mit dem Boden in Berührung kommen können, ist auch ein gefahrloses Fahren mit geöffneter Seitenwand möglich. Durch den oder die antriebslosen Lenker wird eine sichere Führung des freien Endes des unteren Wandteiles gewährleistet und ein gefährliches Pendeln, Schlagen od. dgl. vermieden. Bei teilweiser Öffnung bietet die Seitenwand durch den im wesentlichen senkrecht nach unten orientierten unteren Wandteil ein Schutz der Ladeöffnung und des Fahrzeuginneren gegenüber Witterungseinflüsse. Darüberhinaus wird sichergestellt, daß das Ende des unteren Wandteiles nicht weiter als die Länge des bzw. jedes Lenkers vom Fahrzeug wegragt. Durch den geringeren maximalen Radialabstand des äußersten Randes der Seitenwand von der Drehachse ist aufgrund der kleineren Momente auch die Antriebseinrichtung für das Öffnen und Schließen der Seitenwand kleiner auslegbar und braucht daher auch weniger Platz. Durch die Art des Antriebes über die dritte Achse und den bzw. jeden Hubarm ist eine Krafteinleitung radial außerhalb der Drehachse des Wandteiles gegeben. sodaß keine zu hohen Biege- oder Knickmomente entstehen können und auch weiche, nicht biegesteife Wandelemente für die erfindungsgemäße Seitenwand Verwendung finden können.

Vorteilhafterweise ist aufgrund der Platzverhältnisse die dritte Achse nahe der ersten Achse, vorzugsweise in Richtung der Fahrzeugmitte versetzt angeordnet.

Alternativ dazu kann die dritte Achse auch koaxial zur ersten Achse angeordnet sein.

Für den Fall, daß die erste Achse mit der dritten Achse nicht zusammenfällt, muß ein Längenausgleich für den Hubarm geschaffen werden, daß ein Verschwenken ermöglicht wird. Dazu ist vorgesehen, daß das am oberen Wandteil angelenkte Ende des bzw. jedes Hubarmes bzw. ein damit verbundenes Führungselement, wie z.B. ein Zapfen od. dgl. in der Ebene des oberen Wandteiles verschiebbar ist. Bei einem festen Anlenkpunkt des Hubarmes am oberen Wandteil könnte aber selbstverständlich auch der Hubarm selbst längenveränderlich ausgeführt sein, beispielsweise in Form einer Teleskopstange aus zwei oder mehreren ineinanderschiebbaren Rohrstücken.

Eine besonders einfache, stabile und störungssichere Variante zur Gewährleistung der Verschwenkbarkeit des Wandteiles bei nicht zusammenfallender Drehachse und Anlenkpunkt des Hubarmes kann auch dadurch erzielt werden, indem das am oberen Wandteil angelenkte Ende des bzw. jedes Hubarmes bzw. das damit verbundene Führuhgselement, wie z.B. der Zapfen od. dgl., in einer in der Ebene des oberen Wandteiles vorgesehenen, vorzugsweise die Form einer Nut, eines Profiles od. dgl. aufweisenden Führung geführt ist.

Gemäß einer vorteilhaften Ausführungsform der Erfindung ist die Drehachse nahe des unteren Längsrandes des unteren Wandteiles angeordnet und das andere Ende des bzw. jedes Lenkers in der Mitte zwischen der mit dem bzw. jeden Hubarm verbundenen dritten Achse und der Drehachse an einem Steher des Fahrzeugaufbaus angelenkt. Dadurch wird eine besonders vorteilhafte Führung des freien Endes des unteren Wandteiles ermöglicht und bereits bei teilweise geöffneter Seitenwand ein Be- oder Entladen ermöglicht.

Gemäß eines weiteren Konstruktionsmerkmals ist der untere Längsrand des unteren Wandteiles mit einem Ansatz versehen und am Fahrzeugaufbau eine, diesen Ansatz in geschlossener Endstellung der Seitenwand übergreifende gegengleiche Halterung vorgesehen. Damit ist gewährleistet, daß kurz vor Erreichen der geschlossenen Endstellung der Seitenwand das freie Ende des unteren Wandteiles in eine sichere Führung gelangt und die Seitenwand problemlos geschlossen werden kann. Gleichzeitig ist dadurch auch eine Verriegelung des unteren Wandteiles gegen ungewolltes Öffnen gewährleistet.

Um die Führung in einfacher und gleichzeitig funktionssicherer Weise zu verwirklichen, ist der Ansatz durch eine zur Fahrzeugmitte hin weisenden Abschrägung und die Halterung durch eine zur Abschrägung des unteren Wandteiles komplementäre Abschrägung gebildet.

Gemäß einem weiteren Merkmal der gegenständlichen Erfindung ist vorgesehen, daß die erste Achse außerhalb eines oberen, mindestens 90° aufweisenden Eckbereiches des Fahrzeugaufbaus angeordnet ist. Dadurch kann die Seitenwand vollständig aus dem Bereich der zum Be- und Entladen bestimmten Öffnung des Aufbaues des Fahrzeuges und vorteilhafterweise besonders nahe zur Fahrzeugmitte hin verschwenkt werden, sodaß ein möglichst großer Bereich für die Ladearbeiten freigehalten und der Platzbedarf für das Fahrzeug bei geöffneter Seitenwand minimiert ist.

Für einen Antrieb des Hubarmes der erfindungsgemäßen Seitenwand mit geringem Aufwand und hoher Funktionssicherheit erfolgt dieser gemäß einer vorteilhaften Ausführungsvariante durch ein hydraulisches Zylinder-Kolben-Aggregat, dessen beweglicher Teil, vorzugsweise die Kolbenstange des hydraulischen Zylinder-Kolben-Aggregats mit einem flexiblen Element, beispielsweise einer Kette, einem Seil oder einem Zahnriemen verbunden ist, welches Element über eine gekrümmte Führung geführt ist, die drehfest mit dem schwenkbar am Fahrzeugaufbau angelenkten Ende des Hubarmes verbunden ist. Natürlich sind auch andere Antriebsvarianten für den Hubarm denkbar, beispielsweise Drehantriebe für dessen Befestigungs- und Schwenkachse, Übersetzung der Linearbewegung des Kolbens in eine Drehbewegung mittels einer Zahnstange und eines Zahnrades an der Achse des Hubarmes, und dergleichen.

Die Führung des unteren Wandteils mit dem Lenker ermöglicht ein Be- und Entladen des Fahrzeuges bei nur teilweise geöffneter Seitenwand, da der untere, zweite Wandteil durch den Lenker von dem Fahrzeugaufbau in Abstand gehalten wird. Ein Pendeln des Wandteils wird ebenfalls durch den oder die Lenker verhindert und dadurch die Sicherheit erhöht. Mit einem Lenker mit fester Länge ist ein geführtes Schließen der Seitenwand nicht möglich. Eine entsprechende Sicherheit der verschlossenen Fahrzeugwand wird meist durch zusätzliche Hilfsmittel wie Haken. Bolzen od. dgl. erreicht.

Eine weitere Aufgabe der vorliegenden Erfindung besteht daher darin, ein sicheres Schließen der Seitenwand ohne zusätzliche Hilfsmittel und unter Vermeidung der oben erwähnten Nachteile zu ermöglichen.

Diese Aufgabe wird erfindungsgemäß dadurch gelöst, daß der oder jeder Lenker in seiner Länge veränderbar ist. Beim Schließen der Fahrzeugwand berührt der untere Längsrand des unteren Wandteils den vertikalen Teil des Fahrzeugaufbaus unter einem Winkel und bewegt sich dann unter Verlängerung des Lenkers entlang des vertikalen Teils des Fahrzeugaufbaus bis ein vollständiger Verschluß der Seitenwand gegeben ist und der Wandteil ebenfalls vertikal parallel zum vertikalen Teil des Fahrzeugaufbaus angeordnet ist. Bis der untere Wandteil den Fahrzeugaufbau berührt, führt der Lenker eine reine Drehbewegung aus. die nach der Berührung des unteren Wandteils mit dem Fahrzeugaufbau in eine fast ausschließliche Längsbewegung übergeht. Dadurch ist eine sichere Führung der Seitenwand des Fahrzeuges in eine entsprechende Führung od. ähnl. am Fährzeugaufbau gewährleistet. Es sind keine zusätzlichen Verschlußmittel wie z.B. Haken oder Bolzen notwendig und der Fährzeuglenker muß vor dem Öffnen der Seitenwand keine Haken oder Bolzen öffnen.

Gemäß einer besonderen Ausführungsform wird die erfindungsgemaße Längenveränderung des oder jedes Lenkers durch eine entlang des Lenkers angeordnete Feder, z.B. eine Gasfeder, Spiralfeder od. dgl. bewerkstelligt. Gasfedern stellen übliche und somit kostengünstige Hilfsmittel speziell beim Fahrzeugbau dar, weshalb sich diese Ausführungsform durch besondere Einfachheit auszeichnet. Im Falle einer Gasfeder ist es zweckmäßig, eine auf Druck beanspruchte Gasfeder einzusetzen.

Diese Aufgabe kann auch dadurch gelöst werden, indem der oder jeder Lenker feste Länge besitzt und ein Ende des oder jedes Lenkers bzw. ein damit verbundenes Element od. dgl. federnd verschiebbar gelagert ist. Dadurch wird der selbe technische Effekt, wie bei der ersten erfindungsgemäßen Ausführungsform erzielt, wobei nur eine virtuelle Längenveränderung des Lenkers stattfindet. Die federnde Verschiebbarkeit kann in der Ebene des unteren Wandteiles oder in der Ebene des Stehers des Fahrzeugaufbaus erfolgen und vorzugsweise in Form einer Nut, eines Profiles od. dgl. und einer Rückstellfeder od. dgl. realisiert werden.

Eine weitere Aufgabe der Erfindung liegt darin, den Aufstieg auf die Ladefläche des Fahrzeuges zu erleichtern, der in dem Fall, wenn das Fahrzeug nicht an einer Rampe be- oder entladen wird, mit einem erheblichen Aufwand für das Personal verbunden ist.

Diese Aufgabe wird erfindungsgemäß dadurch gelöst, daß der Unterfahrschutz als klappbare Plattform ausgeführt ist. Dadurch kann das Be- und Entladen in Verbindung mit der erfindungsgemäßen Seitenwand erleichtert werden. In vielen Ländern ist ein seitlicher Unterfahrschutz bei Lastkraftwagen vorgeschrieben. Durch das erfindungsgemäße Merkmal dient der Unterfahrschutz während der Be- oder Entladung des Fahrzeuges einem zusätzlichen Zweck, und zwar dem leichteren Aufsteigen auf die Ladefläche. Diese Erfindung ist nur in Kombination mit der erfindungsgemäßen, nach oben aufklappbaren Seitenwand möglich, da in diesem Fall der Unterfahrschutz bei offener Seitenwand nicht verdeckt wird.

Weitere Merkmale und Ausführungen werden in der nachfolgenden Beschreibung unter Bezugnahme auf die beigefügten Zeichnungen näher beschrieben. Dabei zeigen,
- Fig. 1: eine Seitenansicht der erfindungsgemäßen Seitenwand in geschlossenem Zustand, entsprechend der ersten Endstellung,
- Fig. 2: die Seitenwand in teilweise geöffnetem Zustand,
- Fig. 3: die Seitenwand in einer Stellung mit bereits vollständig freigegebener Ladeöffnung,
- Fig. 4: die Seitenwand in ihrer zweiten Endstellung mit vollständig auf dem Dach des Fahrzeuges zusammengefalteten Wandteilen,
- Fig. 5: eine Seitenansicht einer vorteilhaften Variante zum Antrieb des Hubarmes der erfindungsgemäßen Seitenwand,
- Fig. 6: einen Schnitt längs der Schnittlinie VI-VI aus Fig. 5,
- Fig. 7: eine Seitenansicht der erfindungsgemäßen Seitenwand in teilweise geöffnetem Zustand mit einem in seiner Länge veränderbaren Lenker,
- Fig. 8: die Seitenwand gemaß Fig. 7 in fast geschlossenem Zustand,
- Fig. 9: die Seitenwand gemäß Fig. 7 in geschlossenem Zustand,
- Fig. 10: eine Seitenansicht der erfindungsgemäßen Seitenwand in teilweise geöffnetem Zustand mit einer federnd verschiebbaren Lagerung des Lenkers am unteren Wandteil,
- Fig. 11: eine Seitenansicht der erfindungsgemäßen Seitenwand in teilweise geöffnetem Zustand mit einer federnd verschiebbaren Lagerung des Lenkers am Fahrzeugaufbau,
- Fig 12a: eine schematische Seitenansicht eines Lastkraftwagens mit der erfindungsgemäßen Seitenwand und einem Unterfahrschutz und
- Fig. 12b: eine Seitenansicht einer Ausführungsform des erfindungsgemäßen klappbaren Unterfahrschutzes.

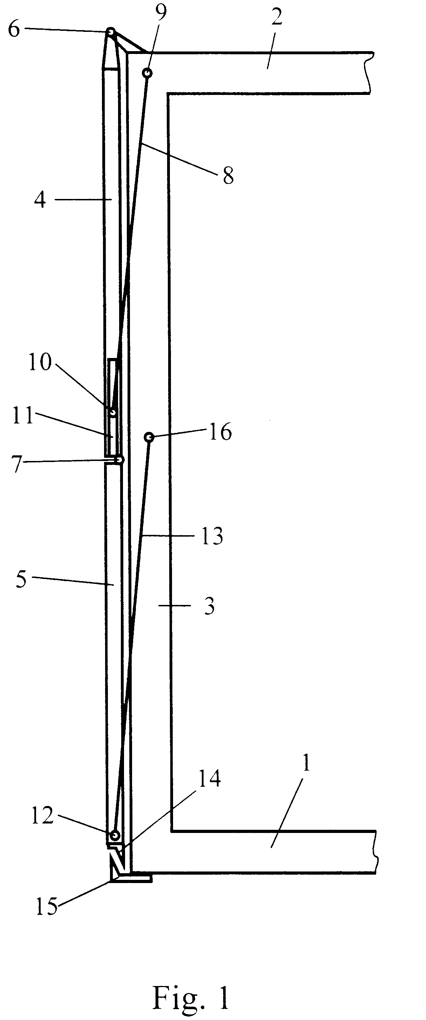

In Fig. 1 ist der Aufbau des Fahrzeuges dargestellt, bestehend aus einem unteren Querrahmenteil 1, einem oberen Querrahmenteil 2 und einem seitlichen, im wesentlichen vertikalen Steher 3. Die seitliche Ladeöffnung des Aufbaues, im wesentlichen der Höhe des Stehers 3 entsprechend, wird in geschlossenem Zustand von zwei Wandteilen 4, 5 abgedeckt. Die Wandteile 4, 5 können beispielsweise als Platten aus starrem Material oder auch als mit Planen od. dgl. bespannte Rahmen ausgeführt sein.

Der obere Wandteil 4 ist außerhalb der oberen Eckkante des Aufbaues, d. h. außerhalb des Verbindungsbereiches von Steher 3 und oberem Querrahmenteil 2, um eine erste, im wesentlichen horizontale Achse 6 verschwenkbar angebracht. Am unteren Rand des oberen Wandteiles 4 ist um eine zweite Achse 7 schwenkbar der untere Wandteil 5 angebracht. Um das Eindringen von Wasser, Schnee, Schmutz und dgl. zu verhindern, kann der Bereich um die erste Achse 6 bis hin zum oberen Querrahmenteil 2 allenfalls mit einer flexiblen Abdeckung versehen sein.

Zur motorischen Betätigung der Seitenwand 4, 5 ist der obere Wandteil 4 mit einem motorisch verschwenkbaren Hubarm 8 verbunden. Dieser Hubarm 8 ist mit einem Ende um eine dritte Achse 9 mittels im Prinzip beliebiger Antriebseinrichtungen verschwenkbar am Aufbau des Fahrzeuges befestigt. Sein anderes Ende ist mit einem Führungselement, wie z.B. einem Zapfen 10 od. dgl. verbunden und in einer die Form einer Nut, eines Profils od. dgl. aufweisenden Führung 11 in der Ebene des oberen Wandteiles 4 geführt. Damit ist ein Längenausgleich für den Abstand der ersten Achse 6, um welche der obere Wandteil 4 verschwenkbar ist, und der dritten Achse 9 des bei diesem Ausführungsbeispiel nicht längenveränderlichen Hubarmes 8 gewährleistet. Bei koaxialer Anordnung der ersten Achse 6 und der dritten Achse 9 ist eine derartige Verschiebemöglichkeit natürlich nicht notwendig.

Erfindungsgemäß greift zumindest an einem der beiden Seiterränder des unteren Wandteiles 5 ein antriebsloser Lenker 13 mit seinem einen Ende über eine Drehachse 12 an und ist mit seinem anderen Ende am Fahrzeugaufbau angelenkt. Vorzugsweise ist der Lenker 13 um eine Achse 16 drehbar am Steher 3 angelenkt, die in der Mitte zwischen der dritten Achse 9 des Hubarmes 8 und der Drehachse 12 in geschlossener Endstellung entspricht. Der untere Längsrand des unteren Wandteils 5 ist mit einem Ansatz 14 in Form einer zur Fahrzeugmitte hin weisenden Abschrägung versehen, die im dargestellten geschlossenen Zustand der Seitenwand in eine Halterung 15 in Form einer zur Abschrägung des unteren Wandteiles 5 komplementären Abschrägung am unteren Querrahmenteil 1 des Fahrzeugaufbaus eingreift. Dadurch ist beim Schließen der Seitenwand im letzten Teilstück der Bewegung eine sichere Führung des unteren Langsrandes des unteren Wandteiles 5 und im geschlossenen Zustand eine Verriegelung gegen ungewolltes Öffnen der Seitenwand gegeben. Im Bereich der Verbindung der beiden Seitenwandteile 4, 5 kann zusätzlich noch - nicht dargestellt - ein Federelement vorgesehen sein, das die beiden Wandteile in Schließrichtung hin beaufschlagt und so ein Aufklappen der Seitenwand verhindert.

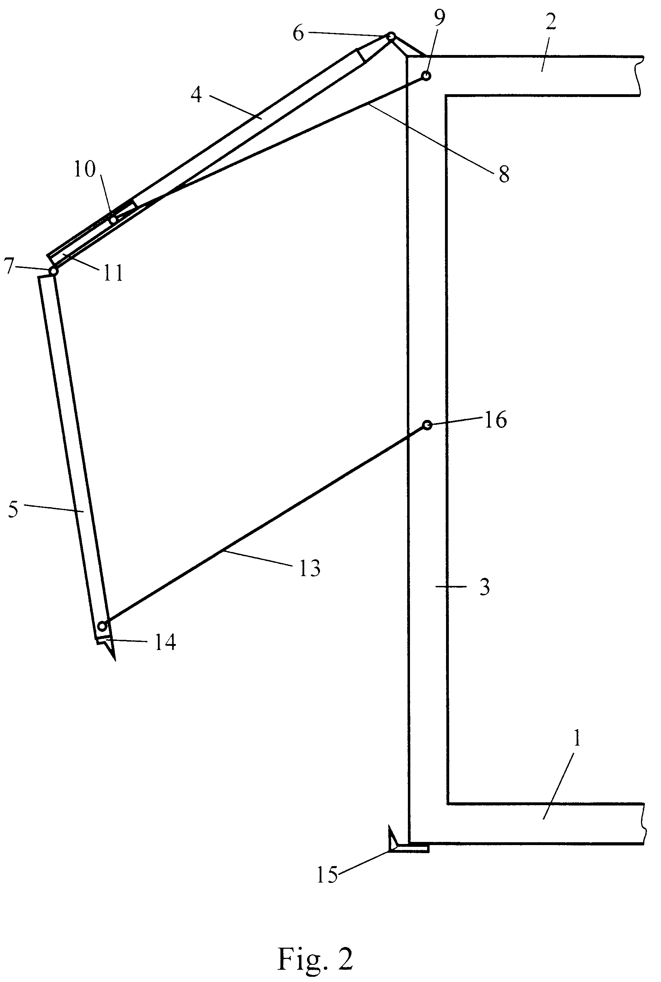

In Fig. 2 ist die erfindungsgemäße Seitenwand in bereits teilweise geöffneter Stellung dargestellt, wobei durch den seitlich wegragenden oberen Wandteil 4 und den im wesentlichen nach unten ragenden, vom Lenker 13 sicher gehaltenen unteren Wandteil 5 eine gegen Witterungseinflüsse schützende teilweise Abdeckung der Ladeöffnung gegeben ist. Der in der Führung 11 bewegliche Zapfen 10 am unteren Ende des Hubarmes 8 ist schon ein beträchtliches Stück nach oben gewandert, da aufgrund der Verschwenkung sich der relative Abstand zwischen dem Zapfen 10 und der ersten Achse 6 des oberen Wandteiles 4 bzw. dem Zapfen 10 und der Achse 9 des Hubarmes 8 verändert hat.

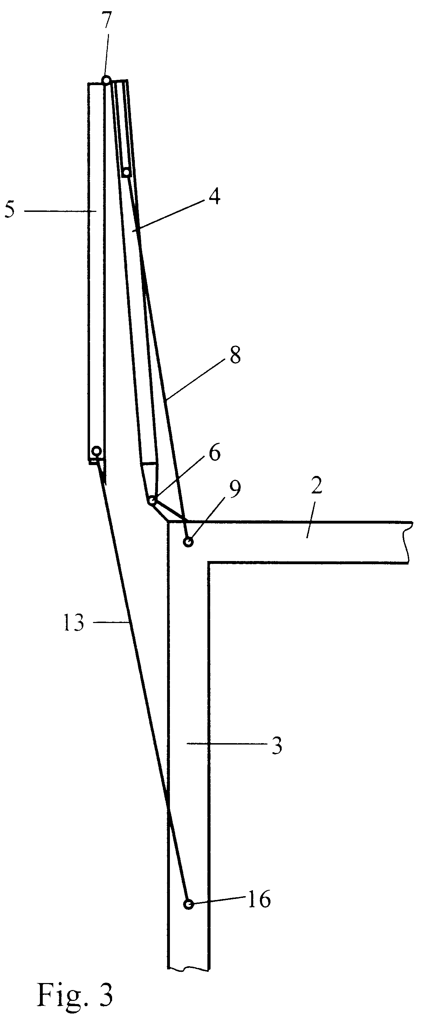

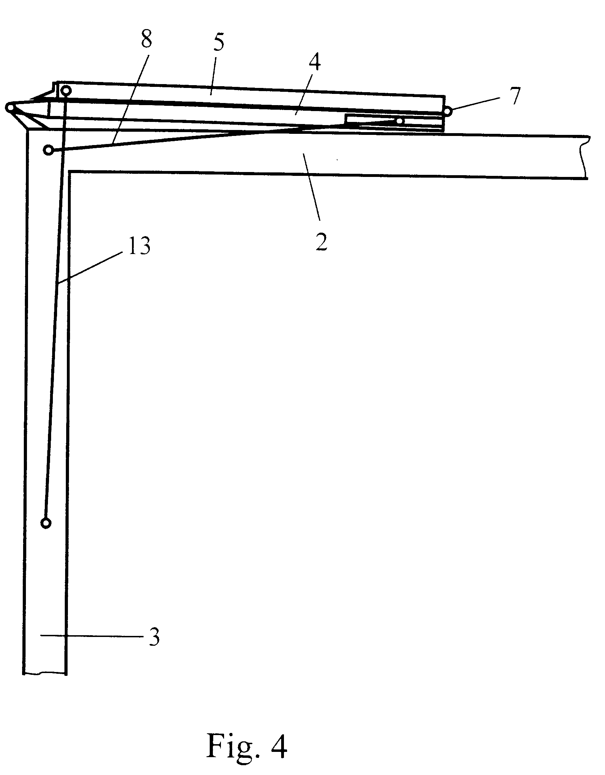

Die maximale Verschiebung des Zapfens 10 in der Führung 11 ergibt sich in der Stellung gemäß Fig. 3, wo die beiden Wandteile 4, 5 am weitesten nach oben geschwenkt sind und beinahe parallel zueinander liegen. Wenn der Hubarm 8 aber vorzugsweise noch weiter geschwerkt werden kann, ist es möglich, die Wandteile 4, 5 in die in Fig. 4 gezeigte Stellung zu bringen, in der sie flach aufeinandergeklappt auf dem Dach des Aufbaues zu liegen kommen und so den geringsten Platzbedarf aufweisen, bei den Be- und Entladearbeiten nicht im Wege sind und auch ein gefahrloses Fahren des Fahrzeuges mit geöffneter Seitenwand gestatten. Der Hubarm 8 ist in dieser zweiten Endstellung der Seitenwand um den gesamten freien Winkelbereich am oberen Eckbereich des Fahrzeugaufbaues, d.s. fast 270°, geschwenkt worden.

Obgleich in Fig. 4 eine Überschneidung des Hubarmes 8 mit dem Lenker 13 dargestellt ist, was durch seitliches Versetzen dieser Elemente leicht ermöglicht werden kann, ist selbstverständlich auch bei anderer Wahl der Anlenkstellen von Hubarm 8 und Lenker 13 eine selbst in der zweiten Endstellung nicht überschneidende Anordnung möglich, wobei dann diese Elemente in der gleichen Ebene angeordnet sein können, was wiederum eine geringe Platzersparnis erbringt.

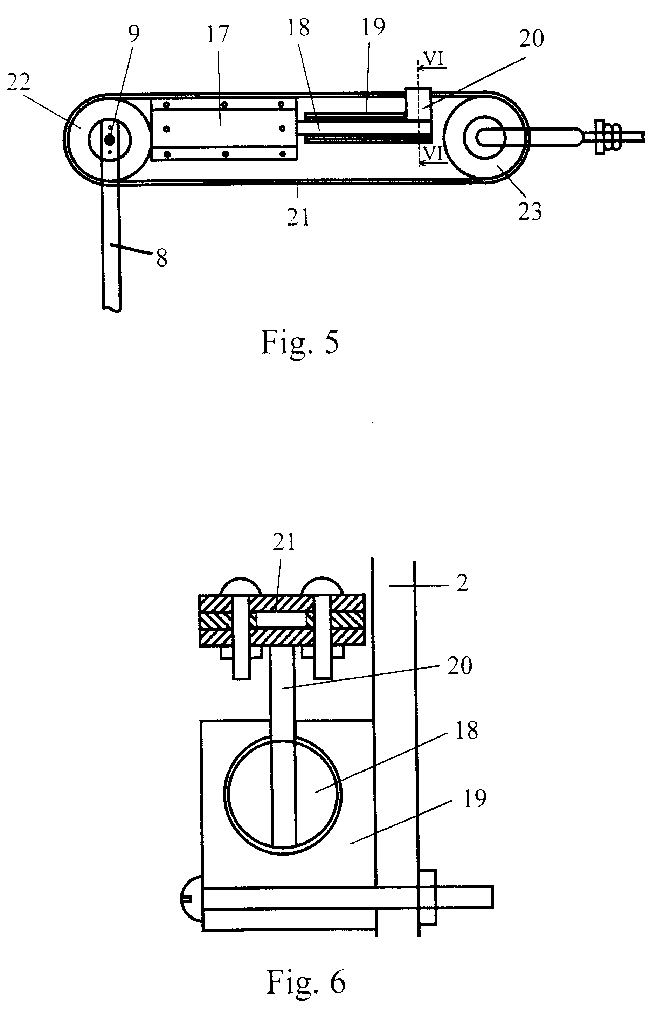

Eine bevorzugte, weil einfach aufgebaute, aus bewährten und funktionssicheren Elementen zusammengesetzte und gut dosierbare Ausführungsform für den Antrieb des Hubarmes 8 ist in den Fig. 5 und 6 dargestellt.

Dazu ist am oberen Querrahmenelement 2 des Aufbaues des Fahrzeuges vorzugsweise liegend ein hydraulischer Zylinder 17 angebracht, dessen Kolbenstange 18 in einer Führung 19 horizontal verschiebbar gelagert. Das dem Zylinder 17 abgewandte Ende der Kolbenstange 18 ist mit einem hier beispielsweise nach oben ragenden Verbindungsstück 20 an einem flexiblen Element 21 befestigt. Dieses flexible Element 21, welches als Seil, Kette, Zahnriemen, Zahnkette od. dgl. ausgeführt sein kann, ist in sich geschlossen und läuft über eine gekrümmte Führung bestehend aus zwei Rollen 22, 23, die ebenfalls am oberen Querrahmenelement 2 vor und hinter dem hydraulischen Zylinder-Kolben-Aggregat 17, 18 - in Richtung seiner Längsachse gesehen - drehbar angebracht sind. Während die Rolle 23 zu Spannzwecken verschiebbar aber fixierbar angebracht ist, ist die Rolle 22 drehfest mit dem Hubarm 8 verbunden und überträgt die Bewegung des vom Zylinder-Kolben-Aggregat 17, 18 bewegbaren flexiblen Elementes 21 auf den Hubarm 8. Der Hub des Zylinder-Kolben-Aggregats 17, 18 und der Abstand der beiden Rollen 22, 23 muß so aufeinander abgestimmt sein, daß der Hubarm 8 die erforderliche Winkelbewegung um seine Achse 9, vorzugsweise um den gesamten freien Winkelbereich außerhalb der oberen Ecke des Aufbaues des Fahrzeuges ausführen kann.

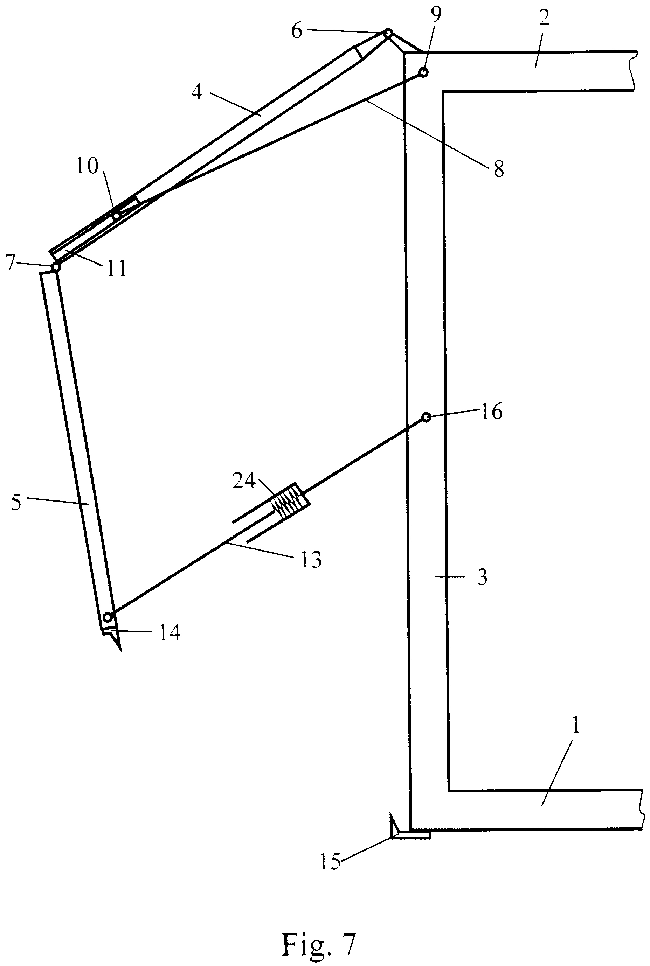

Fig. 7 zeigt die erfindungsgemäße Seitenwand in teilweise geöffnetem Zustand wobei der Lenker 13 mit Hilfe einer teleskopartigen Anordnung, z.B. einer Feder 24 od. dgl. in seiner Länge verstellbar ist. In der geöffneten Stellung der Seitenwand weist der Lenker 13 seine minimale Länge auf

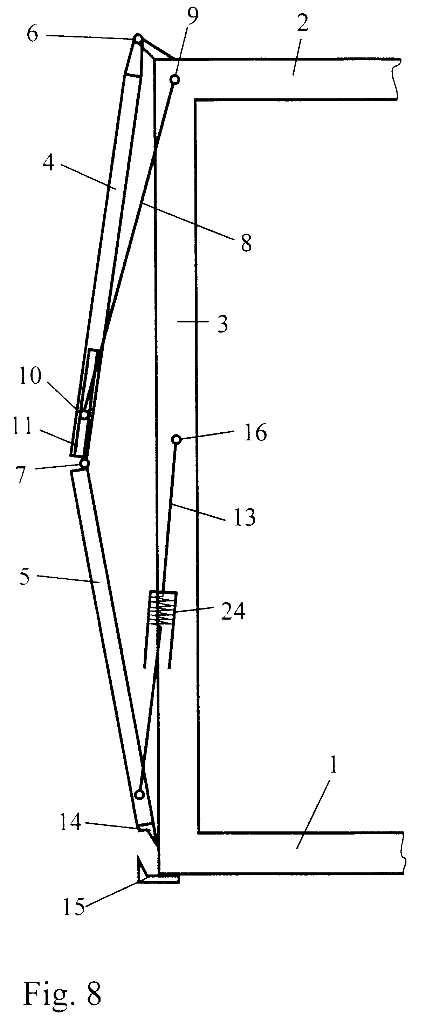

Fig. 8 zeigt die Situation, welche nach Berührung des unteren Wandteils 5 am Steher 3 eintritt. Durch die mit Hilfe der Feder 24 erzielte Verkürzung des Lenkers 13 berührt der untere Längsrand des unteren Wandteils 5 bzw. der Ansatz 14 den Steher 3 des Fahrzeugaufbaus unter einem geringen Winkel. Die Berührungskraft zwischen unterem Wandteil 5 und Steher 3 wird auf die Feder 24 od. dgl. übertragen und dehnt diese, wodurch der Lenker 13 verlängert wird. Bis zur Berührung des Ansatzes 14 des unteren Wandteils 5 mit dem Fahrzeugaufbau führt der Lenker 13 eine reine Drehbewegung aus, nach dieser Berührung führt der Lenker neben einer sehr geringen Drehbewegung hauptsächlich eine Längsbewegung aus. Dadurch gleitet der untere Längsrand des unteren Wandteils 5 bzw. der Ansatz 14 sicher z.B. in eine entsprechende Führung 15 od. dgl. am Fahrzeugaufbau.

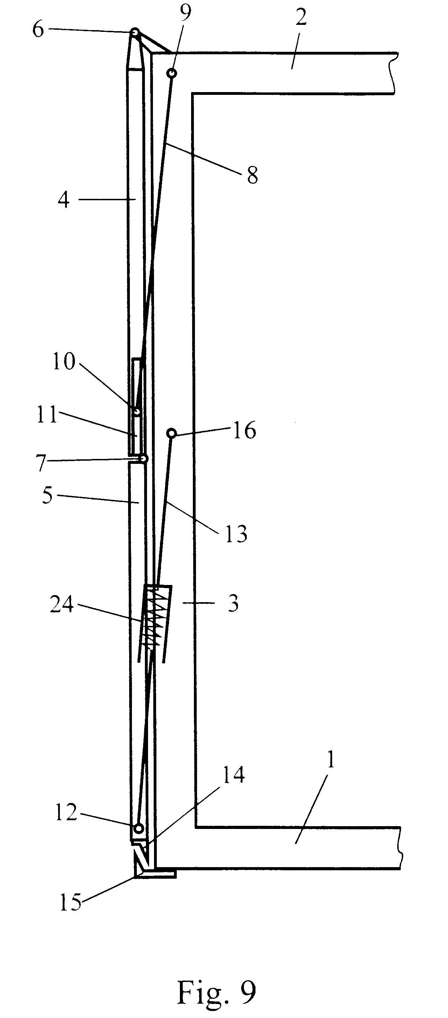

Fig. 9 zeigt die Seitenwand des Fahrzeuges bei vollständigem Verschluß. In dieser Stellung weist der Lenker 13 seine maximale Länge auf, d.h. die Feder 24 ist maximal gedehnt. Dadurch wird ein sicherer Verschluß der Seitenwand 4, 5 ohne zusätzliche Verschlußmittel, wie z.B. Haken oder Bolzen möglich.

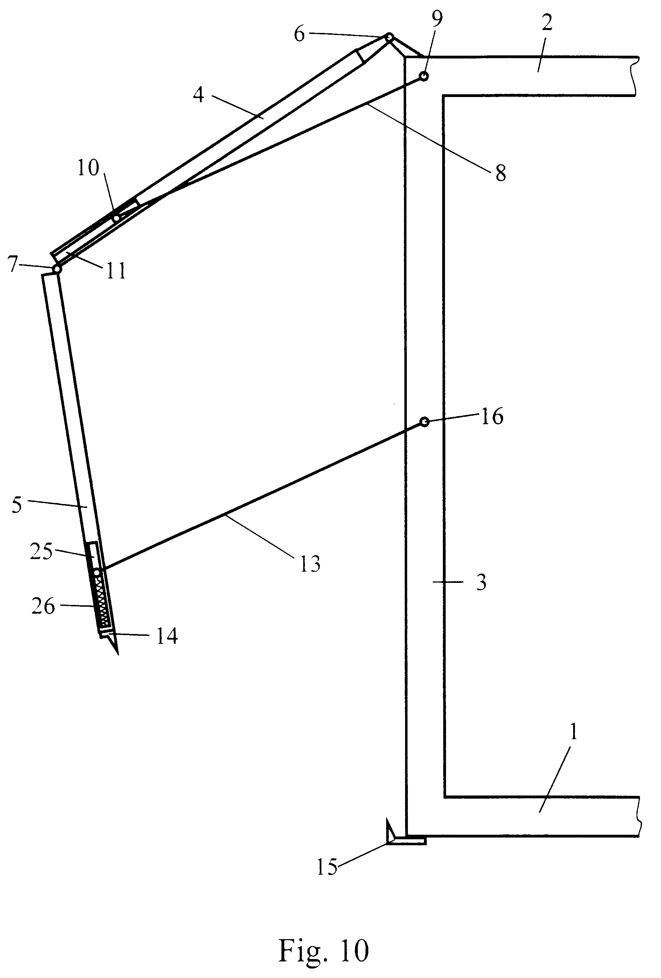

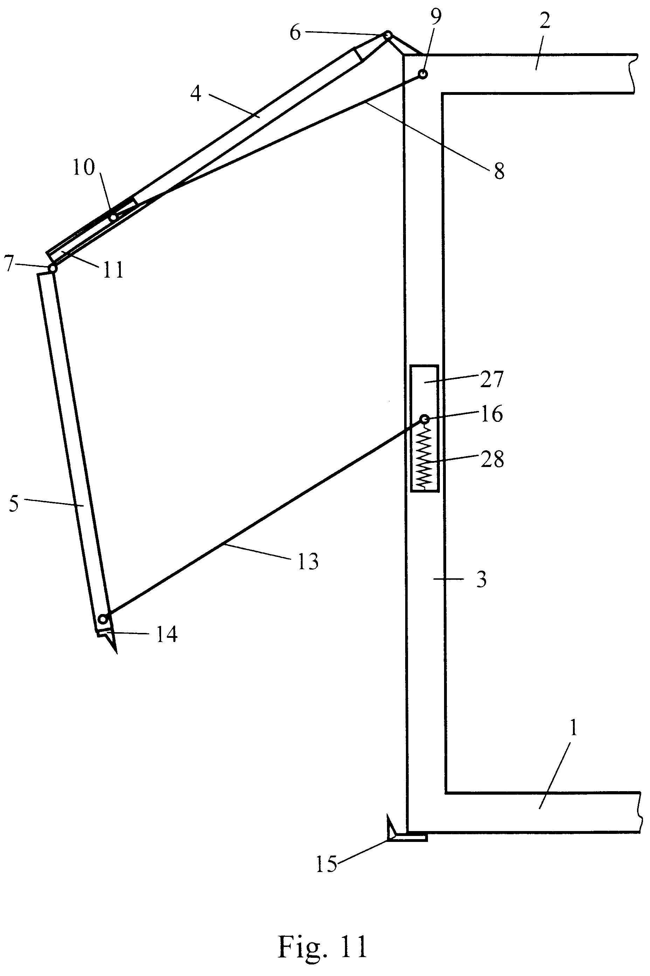

Das erfindungsgemäße Merkmal kann auch durch andere Maßnahmen realisiert werden, welche eine Längenveränderung des Lenkers 13 bewirken. Die in den Fig. 7 bis 9 gezeigte Feder 24 bzw. ähnliche Anordnungen zur Längenveränderung des Lenkers 13 müssen nicht innerhalb des Lenkers 13 liegen. Durch konstruktive Maßnahmen am Angriffspunkt 12 des Lenkers 13 am unteren Wandteil 5 oder am Angriffspunkt 16 des Lenkers 13 am Steher 3 kann der selbe Effekt erzielt werden, wie durch die Längenveränderung des Lenkers 13. Fig. 10 zeigt schematisch eine Ausführungsform der Erfindung am Angriffspunkt 12 des Lenkers 13, die eine Führung 25 im unteren Wandteil 5 und eine Feder 26 oder dgl. umfaßt. Dadurch wird beim Schließen der Fahrzeugwand erreicht, daß bei Berührung des unteren Wandteils 5 eine Kraftwirkung auf die Feder 26 stattfindet und diese dadurch zusammengedrückt wird und eine scheinbare Verlängerung des Lenkers 13 stattfindet. Ebenso kann, wie in Fig. 11 dargestellt, eine Führung 27 und eine Feder 28 oder dgl. auch am Angriffspunkt 16 des Lenkers 13 am vertikalen Teil 3 des Fahrzeugaufbaus vorgesehen sein. Die Ausführungsvariante gemäß Fig. 11 weist gegenüber der Variante aus Fig. 10 den Vorteil auf, daß am Fahrzeugaufbau meist mehr Platz zur Unterbringung der Anordnung zur federnden Verschiebbarkeit exisitiert.

Die federnde Längenveränderung des Lenkers 13 bzw. die federnde Verschiebbarkeit der Enden bzw. damit verbundenen Elemente der Lenker kann selbstverständlich durch verschiedenste Maßnahmen, wie z.B. Spiralfedern, Gasfedern, hydraulischen Federn, elastischen Materialien od. ähnl. realisiert werden und ist nicht auf die oben erwähnten oder in den Zeichnungen skizzierten Methoden beschränkt.

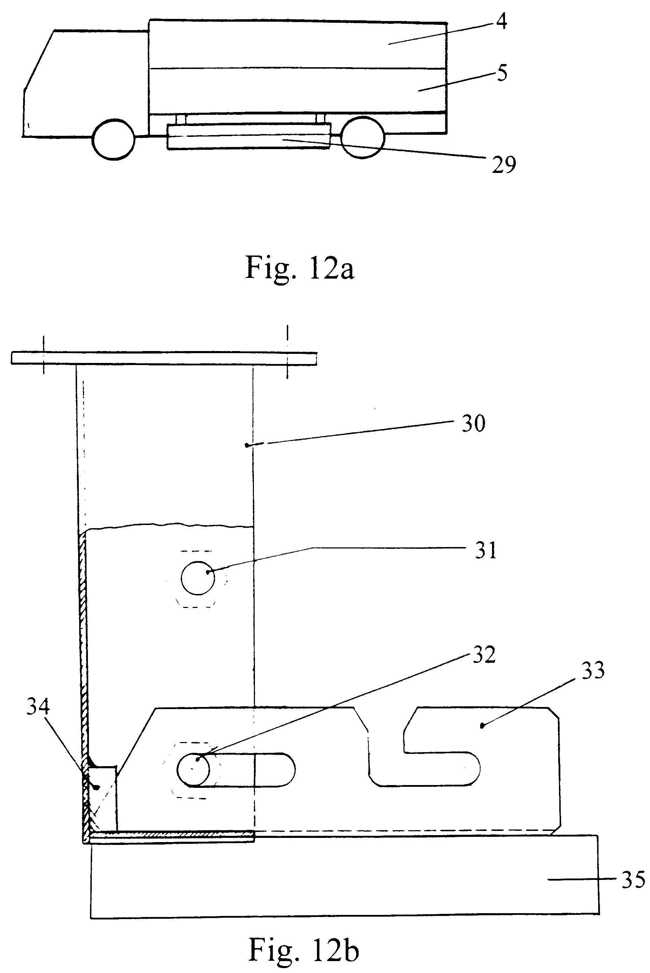

In Fig 12a ist eine schematische Seitenansicht eines Lastkraftwagens mit der erfindungsgemäßen Seitenwand bestehend aus dem oberen Wandteil 4 und dem unteren Wandteil 5 und einem Unterfahrschutz 29 dargestellt. In Fig. 12b ist der Unterfahrschutz 29 im Detail in aufgeklappter Stellung gezeigt. Der Unterfahrschutz 29 besteht im wesentlichen aus einem Steher 30, der am Fahrzeugaufbau befestigt ist und einen klappbaren Teil 35, der als Plattform dient. Im dargestellten Beispiel besteht der Mechanismus zum Aufklappen des Unterfahrschutzes aus Schrauben, Bolzen od. dgl. 31, 32, welche seitlich am Steher 30 befestigt sind. Durch besondere Gestaltung einer an der Plattform 35 montieren Halterung 33 ist eine sichere Verankerung in hochgeklappter Stellung während der Fährt gewährleistet und ein einfaches Aufklappen durch Anheben der Plattform 35 möglich. Durch einen an der Plattform 35 angebrachten Griff od. dgl. (nicht dargestellt) kann das Anheben erleichtert werden. In aufgeklapptem Zustand wird die Plattform 35 des Unterfahrschutzes 29 durch ein Flacheisen 34 in horizontaler Lage gehalten und kann dadurch als Treppe verwendet werden. In Verbindung mit der erfindungsgemäßen nach oben aufklappbaren Seitenwand kann mit Hilfe des als Treppe verwendbaren Unterfahrschutzes das Be- und Entladen des Fahrzeuges wesentlich erleichtert werden.

Im Rahmen der Erfindung können selbstverständlich verschiedene konstruktive Veränderungen vorgenommen werden.

## Patentansprüche

1. Seitenwand für den Aufbau (1, 2, 3) eines Fahrzeuges, beispielsweise eines Lastkraftwagens. Güterwaggons od. dgl. bestehend aus einem oberen Wandteil (4), der an seinem oberen Längsrand um eine erste horizontale Achse (6) mit dem Aufbau (1, 2, 3) schwenkbar verbunden ist, und einem unteren Wandteil (5), der an seinem oberen Längsrand über eine zur ersten Achse (6) parallele zweite Achse (7) am unteren Längsrand des oberen Wandteils (4) gelenkig angebracht ist, wobei zumindest an einem der beiden Seitenränder des oberen Wandteils (4) ein Hubarm (8) angreift, der mit seinem anderen Ende am oberen Querrahmenteil (2) des Aufbaus über eine zur ersten Achse (6) und zweiten Achse (7) parallele, dritte Achse (9) angelenkt ist, die mittels eines Antriebes verschwenkbar ist, und daß zumindest an einem der beiden Seitenränder des unteren Wandteils (5) ein antriebsloser Lenker (13) mit seinem einen Ende über eine Drehachse (12) angreift und mit seinem anderen Ende am Fahrzeugaufbau (1, 2, 3) angelenkt ist, wobei die beiden Wandteile (4, 5) in ihrer einen Endstellung eine vertikale ebene Wand zum Verschließen einer Ladeöffnung des Aufbaues (1, 2, 3) bilden und in ihrer anderen Endstellung eine, die Ladeöffnung zur Gänze freigebende Lage oberhalb des Daches des Aufbaues einnehmen, dadurch gekennzeichnet, daß der bzw. jeder Hubarm (8) um den gesamten freien Winkelbereich verschwenkbar ist, sodaß die beiden Wandteile (4, 5) in ihrer oberhalb des Aufbaudaches befindlichen, geöffneten Endstellung im wesentlichen parallel zueinander zusammengeklappt auf dem Dach liegen.

2. Seitenwand nach Anspruch 1, dadurch gekennzeichnet, daß die dritte Achse (9) nahe der ersten Achse (6), vorzugsweise in Richtung zur Fahrzeugmitte versetzt angeordnet ist.

3. Seitenwand nach Anspruch 1, dadurch gekennzeichnet, daß die dritte Achse (9) koaxial zur ersten Achse (6) angeordnet ist.

4. Seitenwand nach Anspruch 1 oder 2, dadurch gekennzeichnet, daß das am oberen Wandteil (4) angelenkte Ende des bzw. jedes Hubarmes (8) bzw. ein damit verbundenes Führungselement, wie z.B. ein Zapfen (10) od. dgl. in der Ebene des oberen Wandteiles (4) verschiebbar ist.

5. Seitenwand nach Anspruch 4, dadurch gekennzeichnet, daß das am oberen Wandteil (4) angelenkte Ende des bzw. jedes Hubarmes (8) bzw. das damit verbundene Führungselement, wie z.B. der Zapfen (10) od. dgl., in einer in der Ebene des oberen Wandteiles (4) vorgesehenen, vorzugsweise die Form einer Nut, eines Profils od. dgl. aufweisenden Führung (11) geführt ist.

6. Seitenwand nach einen, der Ansprüche 1 bis 5, dadurch gekennzeichnet, daß die Drehachse (12) nahe des unteren Längsrandes des unteren Wandteiles (5) angeordnet ist und das andere Ende des bzw. jedes Lenkers (13) in der Mitte zwischen der mit dem bzw. jeden Hubarm (8) verbundenen dritten Achse (9) und der Drehachse (12) an einem Steher (3) des Fahrzeugaufbaus (1, 2, 3) angelenkt ist.

7. Seitenwand nach einem der Ansprüche 1 bis 6, dadurch gekennzeichnet, daß der untere Längsrand des unteren Wandteiles (5) mit einem Ansatz (14) versehen ist und am Fahrzeugaufbau (1, 2, 3) eine, diesen Ansatz (14) in geschlossener Endstellung der Seitenwand übergreifende gegengleiche Halterung (15) vorgesehen ist.

8. Seitenwand nach Anspruch 7, dadurch gekennzeichnet, daß der Ansatz (14) durch eine zur Fahrzeugmitte hin weisenden Abschrägung und die Halterung (15) durch eine zur Abschrägung des unteren Wandteiles (5) komplementäre Abschrägung gebildet sind.

9. Seitenwand nach einem der Ansprüche 1 bis 8, dadurch gekennzeichnet, daß die erste Achse (6) außerhalb eines oberen, mindestens 90° aufweisenden Eckbereiches des Fahrzeugaufbaus (1, 2, 3) angeordnet ist.

10. Seitenwand nach einem der Ansprüche 1 bis 9, dadurch gekennzeichnet, daß der Antrieb von einem hydraulischen Zylinder-Kolben-Aggregat (17, 18) gebildet wird, dessen beweglicher Teil, vorzugsweise die Kolbenstange (18) des hydraulischen Zylinder-Kolben-Aggregats (17, 18) mit einen, flexiblen Element (21), beispielsweise einer Kette. einem Seil oder einem Zahnriemen verbunden ist, welches Element (21) über eine gekrümmte Führung (22, 23) geführt ist, die drehfest mit dem schwenkbar am Fahrzeugaufbau (1, 2, 3) angelenkten Ende des Hubarmes (8) verbunden ist.

11. Seitenwand nach mindestens einem der vorangehenden Ansprüche, dadurch gekennzeichnet, daß der oder jeder Lenker (13) in seiner Länge veränderbar ist.

12. Seitenwand nach Anspruch 11, dadurch gekennzeichnet, daß die Länge des oder jedes Lenkers (13) durch eine Feder (24), z.B. eine Gasfeder, Spiralfeder od. dgl.. veränderbar ist.

13. Seitenwand nach mindestens einem der vorangehenden Ansprüche, dadurch gekennzeichnet, daß das Ende des oder jedes Lenkers (13) bzw. ein damit verbundenes Element od. dgl. am unteren Wandteil (5) in der Ebene des unteren Wandteiles (5) federnd verschiebbar gelagert ist.

14. Seitenwand nach Anspruch 13, dadurch gekennzeichnet, daß die federnde Verschiebbarkeit durch eine in der Ebene des unteren Wandteiles (5) orientierte Führung (25), vorzugsweise in Form einer Nut, eines Profiles od. dgl. und einer Rückstellfeder od. dgl. (26) realisiert ist.

15. Seitenwand nach mindestens einem der vorangehenden Ansprüche, dadurch gekennzeichnet, daß das Ende des oder jedes Lenkers (13) bzw. ein damit verbundenes Element od. dgl. am Fahrzeugaufbau (1, 2, 3) in der Ebene des Stehers (3) federnd verschiebbar gelagert ist.

16. Seitenwand nach Anspruch 15, dadurch gekennzeichnet, daß die federnde Verschiebbarkeit durch eine in der Ebene des Stehers (3) orientierte Führung (27), vorzugsweise in Form einer Nut, eines Profiles od. dgl. und einer Rückstellfeder (28) od. dgl. realisiert ist.

17. Unterfahrschutz an einer Seitenwand nach mindestens einem der vorangehenden Ansprüche, dadurch gekennzeichnet, daß der Unterfahrschutz (29) als schwenkbare Plattform (35) ausgeführt ist.

## Claims

1. A side wall for the body (1, 2, 3) of a vehicle, for example, a lorry, freight trucks or the like, having at its upper longitudinal edge an upper wall portion (4) pivotably connected via a first horizontal pivot pin (6) to the vehicle body (1, 2, 3), and a lower wall portion (5) which at its upper longitudinal edge is hingeably disposed via a second pivot pin (7) parallel with the first pivot pin (6) on the lower longitudinal edge of the upper wall portion (4), while a lifting arm (8) engages with at least one of the two lateral edges of the upper wall portion (4) and is articulated by its other end to the upper transverse frame portion (2) of the vehicle body via third pivot pin (9) which is parallel with the first pivot pin (6) and the second pivot pin (7) and which can be pivoted by means of a drive, and an undriven link (13) engaged by one of its ends via a pivot pin (12) at least with one of the two lateral edges of the lower wall portion (5) and at its other end articulated to the vehicle body (1, 2, 3), the two wall portions (4, 5) forming in one of their end positions a vertical plane wall for closing a loading opening of the vehicle body (1, 2, 3) and in their other end position occupying a location above the roof of the vehicle body which completely opens up the loading opening, characterised in that the or each lifting arm (8) can pivot through the total free angular zone, so that in their open end position above the vehicle roof the two wall portions (4, 5) can be folded together substantially parallel with one another and lie on the roof.

2. A side wall according to Claim 1, characterised in that the third pivot pin (9) is disposed adjacent the first pivot pin (6), preferably offset in the direction of the centre of the vehicle.

3. A side wall according to Claim 1, characterised in that the third pivot pin (9) is disposed coaxially of the first pivot pin (6).

4. A side wall according to Claim 1 or 2, characterised in that the end of the or each lifting arm (8) or a guide element such as, for example, a pin (10) or the like, which is articulated to the upper wall portion (4), can be displaced in the plane of the upper wall portion (4).

5. A side wall according to Claim 4, characterised in that the end of the or each lifting arm (8) or the guide element such as, for example, the pin (10) or the like which is connected to the upper wall portion (4), is guided in a guide (11) provided in the plane of the upper wall portion (4) and preferably taking the form of a groove, profile or the like.

6. A side wall according to one of Claims 1 to 5, characterised in that the pivot pin (12) is disposed adjacent the lower longitudinal edge of the lower wall portion (5), and the other end of the or each link (13) is articulated to an upright (3) of the vehicle body (1, 2, 3) in the centre between the third pivot pin (9) connected to the or each lifting arm (8) and the pivot pin (12).

7. A side wall according to one of Claims 1 to 6, characterised in that the lower longitudinal edge of the lower wall portion (5) has an attachment (14), while provided on the vehicle body (1, 2, 3) is a retaining means (15) which engages diametrically opposite over said attachment (14) in the closed end portion of the side wall.

8. A side wall according to Claim 7, characterised in that the attachment (14) is formed by a chamfer pointing in the direction of the centre of the vehicle, and the retaining means (15) is formed by a chamfer complementary to the chamfer of the lower wall portion (5).

9. A side wall according to one of Claims 1 to 8, characterised in that the first pivot pin (6) is disposed outside an upper corner zone of the vehicle body (1, 2, 3) covering at least 90°.

10. A side wall according to one of Claims 1 to 9, characterised in that the drive is formed by a hydraulic piston and cylinder unit (17, 18), whose movable part, preferably the piston rod (18) of the hydraulic piston and cylinder unit (17, 18) is connected to a flexible element (21), for example a chain, cable or toothed belt, said element (21) being guided over a curved guide (22, 23) which is non-rotatably connected to the end of the lifting arm (8) pivotably articulated to the vehicle body (1, 2, 3).

11. A side wall according to at least one of the preceding claims, characterised in that the length of the or each link (13) can be altered.

12. A side wall according to Claim 11, characterised in that the or each link (13) can be adjusted by a spring (24), for example, a pneumatic spring, a spiral spring or the like.

13. A side wall according to at least one of the preceding claims, characterised in that the end of the or each link (13) or an element or the like connected thereto is mounted on the lower wall portion (5) resiliently displaceably in the plane of said lower wall portion (5).

14. A side wall according to Claim 13, characterised in that resilient displaceability is provided by a guide (25) oriented in the plane of the lower wall portion (5) and preferably taking the form of a groove, a profile or the like and a return spring or the like (26).

15. A side wall according to at least one of the preceding claims, characterised in that the end of the or each link (13) or an element or the like connected thereto is mounted on the vehicle body (1, 2, 3) resiliently displaceably in the plane of the upright (3).

16. A side wall according to Claim 15, characterised in that resilient displaceability is provided by a guide (27) oriented in the plane of the upright (3) and preferably taking the form of a groove, a profile or the like and a return spring (28) or the like.

17. An undercarriage protection for a side wall according to at least one of the preceding claims, characterised in that the undercarriage protection (29) takes the form of a pivotable platform (35).

## Revendications

1. Paroi latérale pour le montage extérieur (1, 2, 3) d'un véhicule comme, par exemple, un camion,un wagon à marchandises etc., comprenant une partie de paroi supérieure (4) qui, à son bord longitudinal supérieur, est reliée au montage extérieur (1, 2, 3) d'une manière pivotante autour d'un premier axe horizontal (6), et une partie de paroi inférieure (5) qui, à son bord longitudinal supérieur, est articulé au bord longitudinal inférieur de la partie de paroi supérieure (4) autour d'un deuxième axe (7) parallèle au premier axe (6), cependant que un bras de levage (8) est appliqué à au moins un des deux bords latéraux de la partie de paroi supérieure (4), l'autre extrémité duquel bras est articulé à la partie du cadre transversal supérieure (2) du montage extérieur autour d'un troisième axe (9) parallèle au premier axe (6) et au deuxième axe (7), troisième axe qui peut pivoter à l'aide d'un organe d'entraînement, et qu'une bielle sans entraînement (13), par une de ses extrémités, est appliquée à au moins l'une des deux bords latéraux de la partie de paroi inférieure (5) par l'intermédiaire d'un axe de rotation (12) et, par l'autre extrémité, est articulée au montage extérieur de véhicule (1, 2, 3), cependant que les deux parties de paroi (4, 5), dans l'une de leurs positions extrêmes, forment une paroi plane verticale pour fermer une ouverture de chargement du montage extérieur (1, 2, 3) et, dans l'autre de leurs positions extrêmes, prennent une position au-dessus du toit du montage extérieur libérant la totalité de l'ouverture de chargement, caractérisée en ce que le ou chaque bras de levage (8) peut pivoter autour de l'ensemble de la zone angulaire libre de manière que les deux parties de paroi (4, 5), dans leurs positions extrêmes ouvertes au-dessus du toit du montage extérieur, se trouvent dans une position repliée essentiellement parallèle l'une à l'autre sur le toit.

2. Paroi latérale selon la revendication 1, caractérisée en ce que le troisième axe (9) est situé près du premier axe (6) et, de préférence, d'une façon décalée vers le centre du véhicule.

3. Paroi latérale selon la revendication 1, caractérisée en ce que le troisième axe (9) est situé coaxialement au premier axe (6).

4. Paroi latérale selon la revendication 1 ou 2, caractérisée en ce que l'extrémité articulée à la partie de paroi supérieure (4), du ou de chaque bras de levage (8) respectivement un élément de guidage y raccordé comme, par exemple, un tenon (10) etc. peut se déplacer dans le plan de la partie de paroi supérieure (4).

5. Paroi latérale selon la revendication 4, caractérisée en ce que l'extrémité articulée à la partie de paroi supérieure (4), du ou de chaque bras de levage (8) respectivement l'élément de guidage y raccordé comme, par exemple, le tenon (10) etc., est guidé dans un guidage (11) prévu dans le plan de la partie de paroi supérieure (4) et ayant, de préférence, la forme d'une rainure, d'un profilé etc.

6. Paroi latérale selon l'une quelconque des revendications 1 à 5, caractérisée en ce que l'axe de rotation (12) est situé près du bord longitudinal inférieur de la partie de paroi inférieure (5) et l'autre extrémité de la ou chaque bielle (13) est articulée à un montant (3) du montage extérieur de véhicule (1, 2, 3) au centre entre le troisième axe (9) relié au ou à chaque bras de levage (8) et l'axe de rotation (12).

7. Paroi latérale selon l'une quelconque des revendications 1 à 6, caractérisée en ce que le bord longitudinal inférieur de la partie de paroi inférieure (5) est pourvu d'une saillie (14) et un organe de retenu diamétralement opposé (15) enchevauchant ladite saillie (14) en position extrême fermée de la paroi latérale est prévu sur le montage extérieur de véhicule (1, 2, 3).

8. Paroi latérale selon la revendication 7, caractérisée en ce que la saillie (14) est constituée par un biseautage orienté vers le centre du véhicule et l'organe de retenu (15) est constitué par un biseautage complémentaire au biseautage de la partie de paroi inférieure (5).

9. Paroi latérale selon l'une quelconque des revendications 1 à 8, caractérisée en ce que le premier axe (6) est situé à l'extérieur d'une région angulaire supérieure faisant un angle d'au moins 90°, du montage extérieur de véhicule (1, 2, 3).

10. Paroi latérale selon l'une quelconque des revendications 1 à 9, caractérisée en ce que l'organe d'entraînement est constitué par un mécanism à cylindre et piston hydraulique (17, 18), la part mobile duquel et, de préférence, la tige de piston (18) du mécanism à cylindre et piston hydraulique (17, 18) est reliée à un élément flexible (21) comme, par exemple, une chaîne, un cable ou une courroie dentée, lequel élément (21) est guidé sur un guidage courbé (22, 23) qui est relié, d'une façon solidaire en rotation, à l'extrémité du bras de levage (8) articulée de façon pivotante au montage extérieur de véhicule (1, 2, 3).

11. Paroi latérale selon au moins l'une quelconque des revendications précédentes, caractérisée en ce que la ou chaque bielle (13) peut être variée à l'égard de sa longueur.

12. Paroi selon la revendication 11, caractérisée en ce que la longueur de la ou chaque bielle (13) peut être variée à l'aide d'un ressort (24) comme, par exemple, un ressort pneumatique, un ressort spiral etc.

13. Paroi latérale selon au moins l'une quelconque des revendications précédentes, caractérisée en ce que l'extrémité de la ou chaque bielle (13) respectivement un élément etc. y raccordé est monté sur la partie de paroi inférieure (5) en pouvant se déplacer résiliemment dans le plan de la partie de paroi inférieure (5).

14. Paroi selon la revendication 13, caractérisée en ce que la mobilité résiliente est réalisée par un guidage (25) orienté dans le plan de la partie de paroi inférieure (5) et, de préférence, en forme d'une rainure, d'un profilé etc. et par un ressort de rappel (26) etc.

15. Paroi latérale selon au moins l'une quelconque des revendications précédentes, caractérisée en ce que l'extrémité de la ou chaque bielle (13) respectivement un élément etc. y raccordé est monté sur le montage extérieur de véhicule (1, 2, 3) en pouvant se déplacer résiliemment dans le plan du montant (3).

16. Paroi selon la revendication 15, caractérisée en ce que la mobilité résiliente est réalisée par un guidage (27) orienté dans le plan du montant (3) et, de préférence, en forme d'une rainure, d'un profilé etc. et par un ressort de rappel (28) etc.

17. Garde-transport sous véhicule prévue sur une paroi latérale selon au moins l'une quelconque des revendications précédentes, caractérisée en ce que la garde-transport sous véhicule est réalisé en tant que plateforme pivotante (35).
